# EUROPEAN PATENT APPLICATION

(11) **EP 3 543 930 A2**
(43) Date of publication of application: **25.09.2019**
(21) Application number: 18248019.4
(22) Date of filing: 27.12.2018
(51) Int. Cl.: G06Q 20/20, G06Q 20/32, G06Q 20/38

(54) **PAYMENT INTERFACE**

(30) Priority: 27.02.2018 US 201815907046
(71) Applicant: NCR Corporation, Atlanta, GA 30308-1007 (US)
(72) Inventor: JONES, Michael L., Atlanta, GA 30308-1007 (US)
(74) Representative: Secerna LLP

(57) **Abstract**

Systems and methods for activating a remote device may include receiving, at a computing device, an authorization request regarding the transaction. The authorization request may be received from a user mobile device. Once the authorization request is received, the translation information may be translated into a data structure that corresponds to a payment processor. The data structure may be transmitted to the payment processor. An authorization message may be transmitted to a point-of sale device.

## Description

Systems and methods for activating a remote device may include receiving, at a computing device, an authorization request regarding the transaction. The authorization request may be received from a user mobile device. Once the authorization request is received, the translation information may be translated into a data structure that corresponds to a payment processor. The data structure may be transmitted to the payment processor. An authorization message may be transmitted to a point-of sale device.

The above-mentioned and other features and advantages of this invention, and the manner of attaining them, will become more apparent and the invention itself will be better understood by reference to the following description of embodiments of the invention taken in conjunction with the accompanying drawings, wherein:
FIG. 1 shows an operating environment for a payment message interface consistent with this disclosure.
FIG. 2 shows an example schematic of a computing device consistent with this disclosure.
FIG. 3 shows an example request/response packet in accordance with this disclosure.
FIG. 4 shows an example method consistent with this disclosure.

Corresponding reference characters indicate corresponding parts throughout the several views. The exemplifications set out herein illustrate exemplary embodiments of the invention, and such exemplifications are not to be construed as limiting the scope of the invention any manner.

The following detailed description refers to the accompanying drawings. Wherever possible, the same reference numbers are used in the drawings and the following description to refer to the same or similar elements. While embodiments and examples are described, modifications, adaptations, and other implementations are possible. For example, substitutions, additions, or modifications may be made to the elements and stages illustrated in the drawings, and the systems and methods described herein may be modified by substituting, reordering, or adding stages to the disclosed methods or elements to the discloses systems. Accordingly, the following detailed description does not limit this disclosure. Instead, the proper scope of any invention disclosed herein is defined by the appended claims.

Currently, developers for point of sale (POS), card readers (ICR), and mobile devices have to write to multiple interfaces to interface with multiple host/payment platforms. For example, the POS/ICR developers may have to right to a credit/debit interfaces, loyalty programs, and pinpad controllers, sometimes referred to as POSCache. In the past, a POS device would communicate with the three interfaces via three individual ports. As disclosed herein messages, such as XML messages, may be exchanged between mobile devices and hosts. The hosts may then exchanges messages with a payment system. Using the systems and methods disclosed herein, no sensitive data, such as credit/debit card or banking information, is passed the mobile device and the POS devices

As disclosed herein, a payment message interface may allow for a simplified POS solution that may allow a single system to the various services. To accomplish this simplification, disclosed herein may be systems and methods that allow for an XML based, or other high level language, service that may utilize Java's JAXB to accept messages from multiple POS devices. The payment message interface (PMI) systems and methods disclosed herein may provide an interface into all current electronic payment systems (EPS). The systems and methods disclosed herein may provide access to all EPS functionality using a single connection by the POS instead of separate connections for each EPS. The single connection may allow for the transaction requests made in an XML message format to be translated into requests using the native interface, sometimes referred to as a NVP interface.

The systems and methods disclosed herein may allow for the removal of the binary dependencies between POS systems and the payment engine. In addition, the systems and methods disclosed herein may provide a high level interface using XML instead of the lower level NVP interface which can be challenging to code to. Furthermore, the systems and methods disclosed herein may allow for the implementation of a protocol level interface (e.g., XML over a socket) instead of a code level interface (e.g., RSCommon lib with NVP Interface) allowing for easier modifications of the Epsilon, Sigma, and POSCache codebase independently of the POS device that will access the services.

As an example, the systems and methods disclosed herein, may allow a mobile device to activate a POS system without interfacing or otherwise communicating with the POS system. For instance, the mobile device, when proximate the POS system may transmit a message to a payment system. That payment system may then authorize a transaction and transmit an authorization message to the POS system. For example, a user may approach a fuel pump and the user's cell phone may transmit a message to a payment system. The payment system may authorize the transaction for a certain amount (e.g., $75) and transmit an authorization message to the to the fuel pump. The fuel pump may then dispense up to $75 worth of fuel without ever interacting with the user's mobile device.

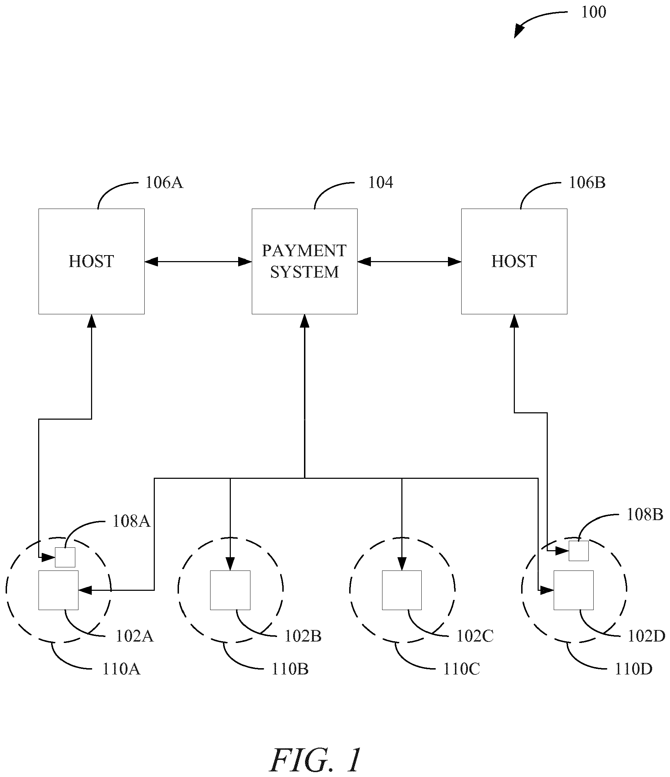

FIG. 1 shows an operating environment 100 for a processing a transaction consistent with this disclosure. The operating environment 100 may include a first POS device 102A, a second POS device 102B, a third POS device 102C, and a fourth POS device 102D (collectively POS devices 102) a payment system 104, and a first host 106A and a second host 106B (collectively host 106). The POS devices 102 may communication with the payment system 104 and the payments system 104 may communicate with the hosts 106 via a network (not shown). The network may include, but is not limited to, a wide area network, a local area network, the Internet, a cellular network, or any combinations thereof.

The POS devices 102 may be any device that allows a user to purchase goods or services. For example, the POS devices 102 may be fuel pumps, kiosks, automated teller machines (ATM), etc. Transactions conducted via the POS devices 102 may authorized by the payment system 104 as disclosed herein.

During use, a user may approach the POS devices 102 and may carry a first mobile device 108A or a second mobile device 108B (collectively mobile devices 108). The mobile devices 108 may also communicate with the hosts 106 via the network. The mobile devices 108 may include an app or other software that includes payment information associated with the user. For example, the mobile devices 108 may include credit card, debit card, or banking information that may allow the user to pay for goods and services.

As disclosed herein, when one of the mobile devices 108 is in close proximity to one of the POS devices 102 the mobile devices 108 may transmit an authorization request to the one of the hosts 106. The authorization requests may be transmitted in response to the user pressing a button on the mobile device 108A or 108B. In addition, the authorization requests may be transmitted in response to the mobile devices 108 being in close proximity to one of the POS devices 102. For example, when the second mobile device 108B has been with a preset distance (e.g., 2 feet, 1 yard, etc.) to one of the POS devices 102 (e.g., the fourth POS device 102D) for a given amount of time (e.g., 30 seconds, 1 minute, etc.), the second mobile device 108B may transmit the authorization request to the second host 106B. The same is true with respect to the first mobile device 108A, first POS device 102A, and the first host 106A.

The app on the mobile devices 108 may determine which of the POS devices 102 it is near. For example, the app may include the location of each of the POS devices 102 and may use a built-in GPS to determine its location. By knowing its location, the mobile devices 108 may select one of the POS devices 102 to request authorization to use. In addition, a first geofence 110A, a second geofence 110B, a third geofence 110C, and a fourth geofence 110D (collectively geofences 110) may be location around each of the POS devices 102. When the mobile device 108 is within one of the geofences 110 the app on the mobile device 108 may detect its proximity to one of the POS devices 102.

In another example, when the mobile devices 108 transmit the authorization request, the authorization request may include the location of the mobile devices 108. The hosts 106 may ping each of the POS devices 110 for its location. The hosts 106 may then determine which of the POS devices 110 is closest to based on the received location of the mobile devices 108 and either known or received locations of the POS devices 102.

By knowing which of the POS devices 102 the mobile devices 108 are proximate, the hosts 106 may know which of the POS devices 102 to active. For example, when the second mobile device 108B is proximate the fourth POS device 102D, the payment system 104 may active the fourth POS device 102D.

The authorization request may also include loyalty information. For example, the authorization request may include a loyalty rewards identification number. The hosts 106 may use the loyalty information to retrieved loyalty information about the user and to credit or debit the user's loyalty account points or other rewards for the transaction.

Once the authorization request is sent to the hosts 106, the hosts 106 may transmit a message to the payment system 104, which may then authorize or deny the transaction. For instance, the authorization request may include credit card information and the payment system 104 may determine that the credit card is valid and the user has available credit to purchase the goods. In another example, the authorization request may include banking information and the payment system 104 may determine that the user has funds in his or her account to complete the transaction. If the user does not have available credit or sufficient funds, the payment system 104 may deny the transaction and transmit a denial notification to the hosts 106, which may transmit the denial notification to the mobile devices 108.

Once the payment system 104 has determined that the transaction should be authorized, the payment system 104 may transmit an authorization message to one of the POS device (e.g., POS device 102D). The authorization message may include a preauthorization for a certain amount. For example, the authorization message may authorize $75 worth of fuel to be dispensed from a fuel pump. The authorization message may also be transmitted to the hosts 106, which may in turn transmit a receipt or other notification to the mobile devices 108.

As disclosed herein, because the mobile devices 108 interacts with the hosts and not the POS devices 102 or the payment system 104, the developers of the app used by the mobile devices 108 and the POS devices 102 only have to write an app that interfaces with one system, the hosts 106. For example, the app developer may write an interface to communicate with the second host 106B and not the first host 106B. As a result, the systems and methods herein are more efficient because multiple interfaces and messaging systems do not have to be maintained. In other words, the payment system 104 may provide an API that allows others to interface with the payment system 104 so that the mobile devices 108 can be used to requires authorization for transactions across multiple platforms with a single message type or format being transmitted by the mobile devices 108 to one or more hosts 104.

The systems and methods disclosed herein allow for transactions to be authorized without the mobile devices 108 and the POS devices 102 communicating with one another. Instead, each only communicates with the one of the hosts 104. Because the mobile devices 108 never communicate with the payment system 104 or the POS devices 102, no sensitive data, such as credit/debit card or banking information is passed from the mobile devices 108 to the payment system 104 or the POS devices 102. Stated another way, only messages are passed between the payment system 104, the hosts 106, and the POS devices 102 and the messages do not contain sensitive data. Thus, the systems and methods disclosed herein are more secure that traditional payment systems where sensitive data is passed between POS devices, payment systems, and mobile devices.

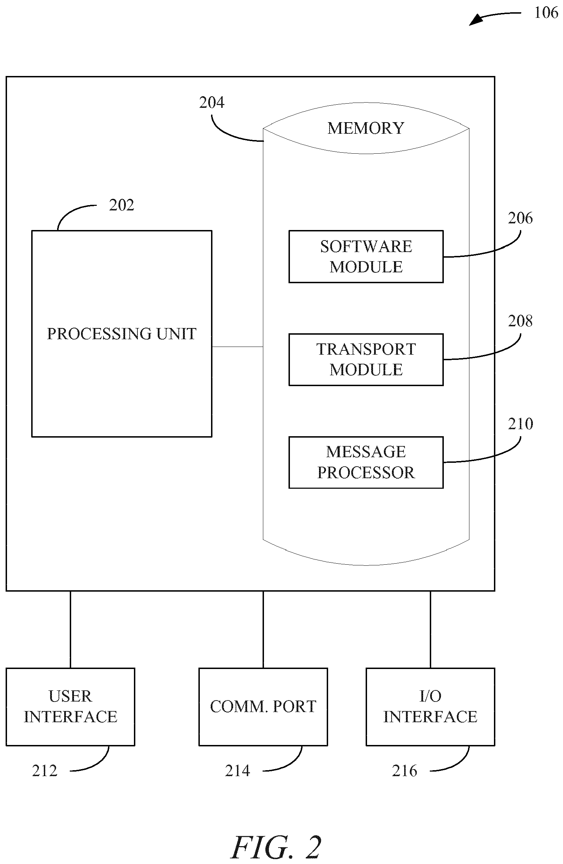

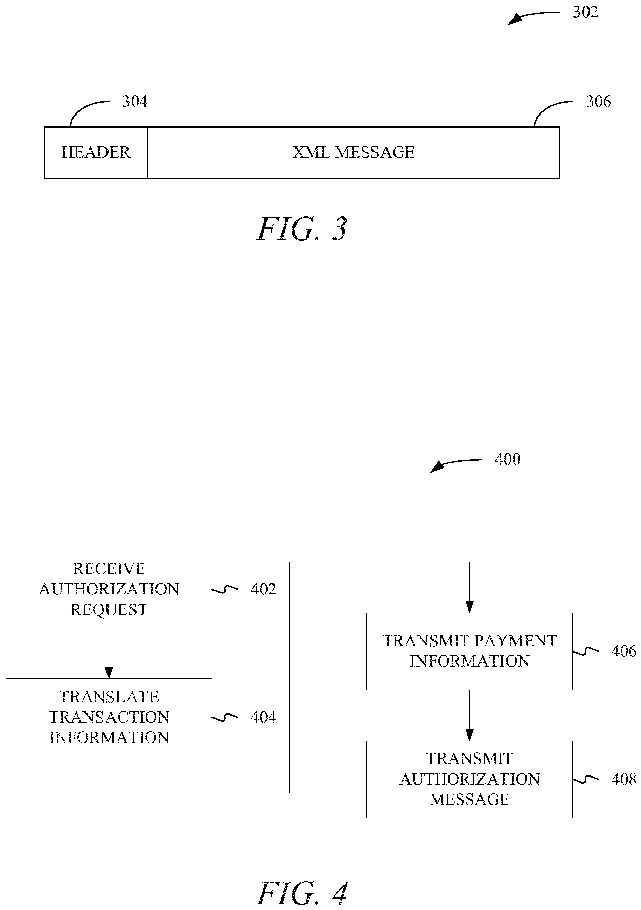

FIG. 2 shows an example schematic of the payment system 104. As shown in FIG. 2, the payment system 104 may include a processing unit 202 and a memory 204. The memory 204 may include a software module 206, a transport module 208 and a message processor 210. While executing on processing unit 202, the software module 204, the transport module 208, and the message processor 210 may perform processes for processing or authorizing a transaction, including, for example, one or more stages included in a method 400 described below with respect to FIG. 4.

The payment system 104 also may include a user interface 212. The user interface 212 can include any number of devices that allow a user to interface with the payment system 104. Non-limiting examples of the user interface 212 include a keypad, a microphone, a speaker, a display (touchscreen or otherwise), etc.

The payment system 104 also may include a communications port 214. The communications port 214 may allow the payment system 104 to communicate with mobile devices, information systems, and POS systems such as those described above with regard to FIG. 1. Non-limiting examples of the communications port 214 include, Ethernet cards (wireless or wired), Bluetooth® transmitters and receivers, near-field communications modules, etc.

The payment system 104 also may include an input/output (I/O) device 216. I/O device 224 may allow the payment system 104 to receive and output information. Non-limiting examples of I/O device 224 include, a camera (still or video), a printer, a scanner, etc.

The payment system 104 may be implemented using a personal computer, a network computer, a mainframe, or any other similar microcomputer-based workstation. The payment system 104 may be located in close proximity to the various information systems and POS systems described herein. The payment system 104 also may be remote from the various information systems and POS systems described herein. For instance, the payment system 104 can be a server located in close proximity to POS device 102. In addition, the payment system 104 may be a personal computer interacting with a plurality of remote servers, via network 106, running an ecommerce system and information systems.

The payment system 104 may be modular in that transport module 208 may be completely independent from the message processor 210. For example, the transport module 208 and the message processor 210 may reside in different files. For instance, the transport module 208 and the message processor 210 may each reside in different Java JAR files. As disclosed herein, the message processor 210 may be dynamically loaded by the transport module 208 when a new client connection is made.

The transport module 208 may receive connections from the various POS devices 102. In addition, the transport module 208 may load a new message processor instance when a new connection is made. During operation, the transport module also may receive messages from the POS device 102 and place the messages in a buffer. The buffer may be passed to the message processor 210 by the transport module. Once the message processor 210 has processed the messages and received replies from any external systems (e.g., location data from the mobile device 108 or the POS devices 102), the transport module 208 may receive a reply from the message processor 210 and transfer the reply to the POS devices 102.

The message processor 210 may connect to epsilon, sigma, and POSCache systems. The message processor 210 also may convert a message buffer into a message object based on a particular schema. For example, as disclosed herein, the message processor 210 may convert a message buffer into a message object based on an XML schema. The message processor 210 also may process messages by converting the XML schema into transactions and NVP using an NVP interface. This converting of messages may allow the payment system 104 to interface with various POS systems and mobile devices maintained and/or manufactured by different vendors.

As shown in FIG. 3, an authorization packet 302 may include a header 304 followed by an XML message 306. The authorization packet may be an authorization request or an authorization message as disclosed herein. The header 304 may be a 4 byte header containing an integer value in network byte order that may specify a length of XML data to follow for the request/response packet 302. During operation, the payment system 104 may read the header 304 (i.e., the first 4 bytes) and convert from a network byte order to a host byte order to determine how many bytes will follow for the request/response packet 302. The XML message 306 may immediately follow the header 304 and may be UTF-8 encoded.

FIG. 4 shows an example method 400 for authorizing a transaction. The method 400 may begin at stage 402, where an authorization request may be received. For example, as disclosed herein, the authorization request may be received at the payment system 104 from the mobile device 108. The authorization request may include loyalty information, payment information (e.g., credit/debit card information or banking routing information), and a location of the mobile device.

From stage 402, the method 400 may proceed to stage 404 where the authorization request may be translated into a data structure. For example, as detailed herein, the transaction information in the authorization message may be translated into a data structure that the payment system 104 can utilize in authorizing the transaction. For instance, the payment system 104 may translate the transaction data into a data structure understood by an epsilon system, a sigma system, and a POSCache system. Thus, the payment system 104 may also translate the transaction data into a data structure that corresponds to a loyalty processor.

In translating the transaction data the payment system 104 may utilize the transport module 208 to transfer the message to a message buffer. The message buffer may be transferred to message processors as described above. Furthermore, translating the transaction data may include a XML transform.

From stage 404, the method 400 may proceed to stage 406, where the payment system 104 may transmit the data structure to the payment processor. Transmitting the data structure to the payment processor may allow the transaction to be approved and any loyalty rewards credited or debited from a user's account. The payment processor may be a component of the payment system 104 or a separate entity. For example, the payment processor may be for a payment processor associated with a credit card issued by a third party and as such the payment system 104 may transmit the data structure to the payment processor of the credit card issuer. The payment processor may also be maintained by the owner of the payment system 104 and thus, the payment data structure may simply be transmitted to a component of the payment system 104.

From stage 406, the method 400 may proceed to stage 408, where an authorization message may be transmitted to a POS device. For example, one the payment system 104 has approved the transaction, the payment system 104 may transmit an authorization message to a POS device. For instance, the payment system 104 may transmit an authorization message to the POS device 102D that authorizes the dispensing of up to $75 worth of fuel. The authorization message may also include any discounts the user may receive. For example, the user may be a member of a loyalty program that gives $0.05 off of each gallon of gas purchased. Thus, the authorization message may include an instruction for a fuel pump to reduce the price per gallon by $0.05.
Example 1 is a method for processing a transaction, the method comprising: receiving, at a computing device comprising a processor, an authorization request regarding the transaction, the authorization request received from a user mobile device; translating, by the computing device, the transaction information into a data structure that corresponds to a payment processor; transmitting, by the computing device, the data structure to the payment processor; and transmitting, by the computing device, an authorization message to a point-of sale device.
In Example 2, the subject matter of Example 1 optionally includes receiving, from the payment processor, a transaction status, wherein the transaction status includes approved or denied.
In Example 3, the subject matter of any one or more of Examples 1-2 optionally include wherein the point-of-sale device is a fuel pump.
In Example 4, the subject matter of any one or more of Examples 1-3 optionally include wherein the authorization message includes a preapproved amount.
In Example 5, the subject matter of any one or more of Examples 1-4 optionally include wherein the user mobile device and the point-of-sale device do not interact with one another.
In Example 6, the subject matter of any one or more of Examples 1-5 optionally include receiving, from the user mobile device, location data for the user mobile device.
In Example 7, the subject matter of any one or more of Examples 1-6 optionally include determining that the user mobile device is proximate the point-of-sale device.
In Example 8, the subject matter of any one or more of Examples 1-7 optionally include determining that the user mobile device is closer to the point-of-sale device than to another point-of-sale device.
Example 9 is a system for processing a transaction, the system comprising: a processor; and a memory storing instructions that, when executed by the processor, cause the processor to: receive an authorization request regarding the transaction, the authorization request received from a user mobile device, translate the transaction information into a data structure that corresponds to a payment processor, transmit the data structure to the payment processor, and transmit an authorization message to a point-of sale device.
In Example 10, the subject matter of Example 9 optionally includes wherein the instructions, when executed by the processor, further cause the processor to receive, from the payment processor, a transaction status, wherein the transaction status includes approved or denied.
In Example 11, the subject matter of any one or more of Examples 9-10 optionally include wherein the point-of-sale device is a fuel pump.
In Example 12, the subject matter of any one or more of Examples 9-11 optionally include wherein the authorization message includes a preapproved amount and the authorization message includes the preapproved amount.
In Example 13, the subject matter of any one or more of Examples 9-12 optionally include wherein the user mobile device and the point-of-sale device do not interact with one another.
In Example 14, the subject matter of any one or more of Examples 9-13 optionally include wherein the instructions, when executed by the processor, further cause the processor to receive, from the user mobile device, location data for the user mobile device.
In Example 15, the subject matter of any one or more of Examples 9-14 optionally include wherein the instructions, when executed by the processor, further cause the processor to determine that the user mobile device is proximate the point-of-sale device.
In Example 16, the subject matter of any one or more of Examples 9-15 optionally include wherein the instructions, when executed by the processor, further cause the processor to determine that the user mobile device is closer to the point-of-sale device than to another point-of-sale device.
Example 17 is a non-transitory computer readable medium storing instructions that, when executed by a processor, cause the processor to: receive an authorization request regarding the transaction, the authorization request received from a user mobile device; translate the transaction information into a data structure that corresponds to a payment processor; transmit the data structure to the payment processor; and receive an approved transaction status from the payment processor; transmit an authorization message to a point-of sale device, wherein the user mobile device and the point-of-sale device do not interact with one another.
In Example 18, the subject matter of Example 17 optionally includes wherein the instructions, when executed by the processor, further cause the processor to.
In Example 19, the subject matter of any one or more of Examples 9-18 optionally include wherein the authorization message includes a preapproved amount and the authorization message includes the preapproved amount.
In Example 20, the subject matter of any one or more of Examples 9-19 optionally include wherein the instructions, when executed by the processor, further cause the processor to: receive a location of the user mobile device from the user mobile device; and determine that the location of the user mobile device is within a maximum distance from the point-of-sale device.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A method for processing a transaction, the method comprising:
receiving (402), at a computing device comprising a processor, an authorization request regarding the transaction, the authorization request received from a user mobile device;
translating (404), by the computing device, the transaction information into a data structure that corresponds to a payment processor;
transmitting (406), by the computing device, the data structure to the payment processor; and
transmitting (408), by the computing device, an authorization message to a point-of sale device.

2. The method of claim 1, further comprising receiving, from the payment processor, a transaction status, wherein the transaction status includes approved or denied.

3. The method of any of the preceding claims, wherein the point-of-sale device is a fuel pump.

4. The method of any of the preceding claims, wherein the authorization message includes a preapproved amount.

5. The method of any of the preceding claims, wherein the user mobile device and the point-of-sale device do not interact with one another.

6. The method of any of the preceding claims, further comprising receiving, from the user mobile device, location data for the user mobile device.

7. The method of any of the preceding claims, further comprising determining that the user mobile device is proximate the point-of-sale device.

8. The method of any of the preceding claims, further determining that the user mobile device is closer to the point-of-sale device than to another point-of-sale device.

9. A system for processing a transaction, the system comprising:
a processor; and
a memory (204) storing instructions that, when executed by the processor (202), cause the processor to:
receive (402) an authorization request regarding the transaction, the authorization request received from a user mobile device,
translate (404) the transaction information into a data structure that corresponds to a payment processor,
transmit (406) the data structure to the payment processor, and
transmit (408) an authorization message to a point-of sale device.

10. The system of claim 9, wherein the instructions, when executed by the processor, further cause the processor to receive, from the payment processor, a transaction status, wherein the transaction status includes approved or denied.

11. The system of any of claims 9-10, wherein the point-of-sale device is a fuel pump.

12. The system of any of claims 9-11, wherein the authorization message includes a preapproved amount and the authorization message includes the preapproved amount.

13. The system of any of claims 9-12, wherein the user mobile device and the point-of-sale device do not interact with one another.

14. The system of any of claims 9-13, wherein the instructions, when executed by the processor, further cause the processor to receive, from the user mobile device, location data for the user mobile device.

15. The system of any of claims 9-14, wherein the instructions, when executed by the processor, further cause the processor to determine that the user mobile device is proximate the point-of-sale device.
